# FASCICULE DE BREVET EUROPEEN

(11) **EP 4 470 906 B1**
(45) Date de publication et mention de la délivrance du brevet: **29.04.2026**
(21) Numéro de dépôt: 24179394.2
(22) Date de dépôt: 31.05.2024
(51) Int. Cl.: B64C 1/06, B64D 37/04, B64D 37/32, F17C 1/00, B64D 37/30

(54) **AÉRONEF AVEC ÉLÉMENT DE PROTECTION DE RÉSERVOIRS D'HYDROGÈNE**
FLUGZEUG MIT WASSERSTOFFBEHÄLTERSCHUTZELEMENT
AIRCRAFT WITH HYDROGEN RESERVOIR PROTECTION FEATURE

(30) Priorité: 31.05.2023 FR 2305466
(43) Date de publication de la demande: 04.12.2024
(73) Titulaire: SAS Beyond Aerospace, 31270 Cugnaux (FR)
(72) Inventeur: CHOMEL, Valentin, 31270 Cugnaux (FR)
(74) Mandataire: Bringer IP

(56) Documents cités:
- DE-A1- 3 049 429
- FR-A1- 3 100 798
- FR-A1- 3 116 238
- US-A- 4 925 132
- US-A1- 2021 078 702
- US-A1- 2022 074 548

## Description

### DOMAINE TECHNIQUE DE L'INVENTION

La présente invention concerne un aéronef, plus particulièrement un aéronef propulsé par des moteurs électriques alimentés par pile à combustible à hydrogène. L'invention trouve notamment application avec des avions électriques implémentant l'invention décrite.

### ETAT DE LA TECHNIQUE

Les aéronefs actuels et plus précisément les avions sont propulsés à partir de l'énergie produite par combustion de kérosène. L'aviation civile est un très gros émetteur de gaz à effet de serre dont le dioxyde de carbone. Il est impératif de développer des solutions alternatives qui ne produisent pas ou peu de gaz à effet de serre. Les aéronefs à propulsion électrique sont une solution pour réduire les gaz à effet de serre émis par l'aviation civile. L'emploi de batteries n'est pas optimal au regard du poids de celles-ci. La solution de propulsion électrique alimentée par pile à combustible à hydrogène est une solution de nouvelle propulsion possible.

L'une des problématiques de la propulsion électrique alimentée par pile à combustible à hydrogène réside dans le stockage du dihydrogène. En effet, le dihydrogène requiert un stockage spécifique et très contraignant. Lorsque le dihydrogène est stocké sous forme gazeuse, il est nécessaire de le comprimer à des pressions très élevées, par exemple 700 bars, pour pouvoir embarquer suffisamment de dihydrogène pour permettre aux aéronefs de disposer d'une autonomie acceptable. Lorsque le dihydrogène est stocké sous forme liquide, il est nécessaire de le maintenir à une température très basse c'est-à-dire -253°C. De plus, le dihydrogène est très inflammable. Ainsi, pour permettre au réservoir d'avoir la robustesse suffisante et le poids minimum il est préférable d'avoir des réservoirs avec des formes les plus ramassées possible. Ces formes sont par exemple de types sphériques ou cylindriques. De telles contraintes sur la forme, la sécurité et le volume des réservoirs de dihydrogène entrainent des problématiques de positionnement de ces réservoirs dans l'aéronef.

Plusieurs solutions ont été proposées. Par exemple, les réservoirs peuvent être placés au-dessus du fuselage.

Toutefois, pour éviter que les réservoirs ne viennent écraser les passagers lors d'un atterrissage brutal, un surdimensionnement de la structure des cadres du fuselage est nécessaire. Le poids de l'avion est alors encore augmenté.

Pour éviter ce surpoids, les réservoirs peuvent par exemple être positionnés à l'arrière du fuselage de l'avion. Toutefois, cette solution à l'inconvénient d'imposer de réduire l'espace de la cabine, réduction qui peut être de l'ordre de 30%. De plus, le centre de gravité d'un tel avion est déplacé vers l'arrière.

Pour éviter ces problèmes, les réservoirs peuvent par exemple être positionnés sous les ailes de l'avion. Toutefois, cette solution à l'inconvénient d'augmenter les risques en cas d'angle excessif de roulis à l'atterrissage, d'augmenter la trainée durant le vol et d'augmenter la masse du réseau de distribution de dihydrogène. Le document US2022074548A1 divulgue un aéronef ayant des réservoirs de dihydrogène remplaçables. Les réservoirs sont séparés par une structure en cadre.

Ainsi, les solutions actuelles permettant d'intégrer des réservoirs de dihydrogène dans un aéronef présentent des désavantages importants en termes d'augmentation du poids de l'avion, de réduction de sa charge utile ou de son volume utile et de sécurité de l'intégration.

La présente invention vise à résoudre, au moins en partie, ces inconvénients.

### RESUME DE l'INVENTION

Plus précisément, la présente invention concerne un aéronef comprenant:
- un fuselage comprenant un cadre de fuselage et une zone de soute et/ou une zone de passagers, ledit fuselage comprend également un espace, ledit espace étant situé en dessous de la zone de soute lorsque l'aéronef comprend une zone de soute et sous la zone des passagers sinon ;
- un caisson de voilure ;
- au moins deux réservoirs à hydrogène disposés dans l'espace ;
- un élément séparant les deux réservoirs à hydrogène, fixé au caisson de la voilure ou au cadre du fuselage de l'aéronef ;
dans lequel l'élément qui sépare les deux réservoirs à hydrogène dépasse sous les réservoirs pour réduire les contraintes sur les réservoirs en cas de contact du fuselage avec le sol.

Cela permet de placer les réservoirs à un endroit particulièrement avantageux tout en les protégeant des contraintes qu'ils pourraient subir lorsque l'aéronef rentre en contact avec le sol occasionnant des contraintes fortes sur le fuselage, par exemple entrainant la déformation ou la rupture du fuselage ou d'une partie du dit fuselage. Ainsi, si le fuselage se déforme ou s'arrache, le fait que l'élément séparant les deux réservoirs dépasse de sous les réservoirs permet d'éviter que les éléments du fuselage ou directement le sol viennent impacter les réservoirs. En effet, si les éléments du fuselage se déforment, ils viendront en premier lieu en contact avec l'élément séparant les deux réservoirs et non directement en contact avec les réservoirs. Si les éléments du fuselage sont arrachés ou limés, le sol ne viendra pas directement en contact avec les réservoirs, mais en premier lieu en contact avec l'élément les séparant. L'élément séparant les deux réservoirs présente donc des propriétés mécaniques lui permettant de résister aux contraintes subies par l'aéronef en cas de contact direct du fuselage avec le sol, ou en tout cas d'absorber une partie de ces contraintes à la place des réservoirs. Par exemple, tout atterrissage dit d'urgence ou dur ou brutal, c'est-à-dire un atterrissage provoquant des charges importantes sur l'avion plus importantes que le cas nominal défini par le constructeur, telles que pouvant entraîner des dommages aux trains d'atterrissage ou d'autres types de dommages à la structure de l'avion. La structure doit permettre à chaque occupant d'avoir toutes les chances d'éviter des blessures graves, en tenant compte de l'utilisation correcte des sièges, ceintures de sécurité et harnais d'épaules, dans des cas de facteurs de charges défini par une accélération normale ou vitesse verticale au moment du toucher des roues, allant jusqu'à plusieurs g, par exemple jusqu'à 6.0g pour un avion de masse maximale au décollage inférieure à 8.6 tonnes ou 9.0g d'accélération verticale pour un avion de masse maximale au décollage supérieure à 8.6 tonnes.

Les avions à train d'atterrissage rétractable doivent être conçus pour protéger les occupants lors d'un atterrissage avec roues rentrées, en cas de facteurs de charges défini par une accélération normale ou vitesse verticale au moment de toucher le sol allant jusqu'à plusieurs g, par exemple jusqu'à 3.0g d'accélération verticale. La partie inférieure du fuselage va rentrer en contact avec le sol et va se déformer puis frotter ou limer avec le sol. En fonction des déformations et efforts, l'élément de séparation protègera le fuselage et les réservoirs.

Par exemple, tout atterrissage dit d'urgence ou dur ou brutal, c'est-à-dire dans le cas d'un aéronef de moins de 8.6 tonnes tout atterrissage avec une accélération verticale de plus de 6g et dans le cas d'un aéronef de plus de 8.6 tonnes tout atterrissage avec une accélération verticale de plus de 9g ou en cas d'atterrissage sans ouverture du train d'atterrissage avec une accélération verticale de plus de 1g la partie inférieure du fuselage va rentrer en contact avec le sol et va se déformer. Si la déformation est suffisamment importante alors le fuselage rentrera en contact avec l'élément de séparation plutôt qu'avec les réservoirs.

Ainsi, les propriétés mécaniques requises pour l'élément séparant les réservoirs dépendent donc du type d'appareil (avions, hélicoptère, etc.), de sa masse, de la présence d'une soute ou non, des matériaux utilisés pour la réalisation de sa structure. Les références sur ce qui est considéré comme un atterrissage dur dépend de ces éléments.

Comme indiqué précédemment, placer les réservoirs sous la soute et la cabine, c'est-à-dire dans la partie inférieure du fuselage, est particulièrement avantageux. En effet, cela présente l'intérêt par rapport à d'autres modes de réalisation de minimiser l'impact sur la traînée de l'aéronef, de ne pas impacter négativement le centre de gravité de l'appareil, de permettre d'accéder aux réservoirs plus facilement (par exemple pour la maintenance), d'isoler les réservoirs de la cabine passager ce qui réduit le risque d'accident en cas de fuite, de feu ou d'explosion et cela minimise l'adaptation de la structure du fuselage nécessaire pour accueillir les réservoirs d'hydrogène.

Par aéronef, il est entendu tout véhicule capable de se déplacer dans les airs et notamment un avion, un hélicoptère, etc.

Les réservoirs d'hydrogène permettent de stocker le dihydrogène qui servira à produire l'énergie nécessaire à la propulsion de l'aéronef, l'aéronef étant par exemple un avion électrique fonctionnant avec de l'électricité produite par une pile à combustible à hydrogène.

Par fuselage, il est entendu le corps de l'aéronef.

La zone de passagers est celle qui permet d'accueillir les passagers, mais également l'équipage de l'aéronef. Dans le cadre d'un avion, il s'agit de la partie pressurisée, c'est-à-dire les cabines de l'avion, dont la cabine de pilotage, la cabine passager.

La zone de soute est la zone qui permet de transporter autre chose que des personnes, par exemple du fret, des bagages, etc. L'aéronef peut comprendre à la fois une cabine passager et une soute. C'est notamment le cas dans les avions dits « de ligne », dans ce cas la cabine passager est située au-dessus de la soute. L'aéronef peut comprendre uniquement une cabine passager, uniquement une soute ou les deux.

L'espace dans lequel sont situés les réservoirs est dans la partie inférieure du fuselage situé en dessous de la zone de soute lorsque l'aéronef comprend une zone de soute et sous la zone des passagers, sinon. La partie inférieure du fuselage peut être la partie basse du fuselage dans laquelle aucune charge utile n'est transportée.

Par espace il est entendu un volume dans le fuselage situé sous les zones de transport, c'est-à-dire la zone de soute et la zone de passagers. Lorsque le fuselage est de forme allongée, par exemple dans le cas d'un avion ou d'un hélicoptère, alors l'espace est de forme longitudinale.

Par réservoirs à hydrogène, il est compris tout type de réservoir, c'est à dire aussi bien les réservoirs pour stocker l'hydrogène sous forme gazeuse que l'hydrogène sous forme liquide. Ces réservoirs peuvent être en tout matériaux, par exemple du composite, de l'alliage d'aluminium, de l'acier, du titane. Ces réservoirs à hydrogène sont disposés dans l'espace.

Par élément séparant les deux réservoirs, il est entendu tout élément pouvant être disposé entre les réservoirs. Cet élément est un élément dépassant sous les réservoirs, c'est-à-dire que le point le plus bas de l'élément selon l'axe vertical de l'aéronef est plus bas que le point le plus bas des réservoirs. L'axe vertical de l'aéronef correspond à un axe de référence de l'aéronef qui est perpendiculaire au sol lorsque l'aéronef est au sol. L'élément dépasse de sorte à réduire les contraintes sur les réservoirs en cas de contact du fuselage avec le sol, notamment en cas d'atterrissage sans train, d'amerrissage, d'atterrissage hors-piste, etc.

La géométrie de l'élément séparant les deux réservoirs et notamment la partie dépassant de sous les réservoirs participe à l'absorption d'une partie de ces contraintes à la place des réservoirs, ainsi plus l'élément séparant dépasse (verticalement et/ou en longueur) et plus l'élément peut absorber les contraintes et ainsi réduire celles qui seraient appliquées.

Le dépassement sous les réservoirs de l'élément de séparation est supérieur à 5 ou 10 ou 15 ou 20 cm pour un aéronef de moins de 8,6 tonnes et supérieur à 5 ou 10 ou 15 ou 20 ou 50 cm pour un aéronef de plus de 8,6 tonnes.

Selon un mode de réalisation, l'élément séparant les réservoirs à hydrogène dépasse au-dessus des réservoirs pour réduire les contraintes sur les réservoirs en cas de contact du fuselage avec le sol.

Ainsi, lorsque le fuselage se déforme et entraine un écrasement de l'espace dans lequel sont disposés les réservoirs ou lorsque les éléments disposés au-dessus des réservoirs (par exemple le plancher de soute ou de cabine) s'affaissent alors l'élément séparant rentre en contact avec les éléments situés au-dessus des réservoirs avant les réservoirs eux-mêmes. Ainsi, l'élément séparant les réservoirs réduit les contraintes appliquées sur les réservoirs par les éléments disposés au-dessus des réservoirs.

Par l'élément dépasse au-dessus des réservoirs il est entendu que le point le plus haut de l'élément selon l'axe vertical de l'aéronef est plus haut que le point le plus haut des réservoirs.

Selon un mode de réalisation, un espace vide ou sans structure pouvant endommager les réservoirs est ménagé au-dessus et/ou au-dessous de chaque réservoir. Ces espaces peuvent s'étendre entre le réservoir et :
- le point le plus haut de l'élément selon l'axe vertical de l'aéronef ; et/ou
- le point le plus bas de l'élément selon l'axe vertical de l'aéronef.

L'élément de séparation peut venir au-dessus et/ou au-dessous de chaque réservoir selon l'axe vertical de l'aéronef, dans ce cas la partie de l'élément qui vient au-dessus et/ou au-dessous des réservoirs est au-dessus, respectivement en dessous, de l'espace (EVS) vide ou sans structure pouvant endommager les réservoirs.

Plus la hauteur (selon l'axe vertical de l'aéronef) de l'EVS est importante et plus le risque que la déformation de l'élément séparant les réservoirs entraine des contraintes sur les réservoirs est faible.

La hauteur (selon l'axe vertical de l'aéronef) de l'EVS sous et/ou sur les réservoirs est supérieure à 5 ou 10 ou 15 ou 20 cm pour un aéronef de moins de 8,6 tonnes et supérieur à 5 ou 10 ou 15 ou 20 ou 50 cm pour un aéronef de plus de 8,6 tonnes.

Selon un mode de réalisation, l'élément séparant les deux réservoirs à hydrogène comprend une poutre.

La poutre peut être un élément de structure qui présente les dimensions requises, à savoir que la poutre dépasse au-dessous des réservoirs voir également au-dessus des réservoirs. La poutre peut être fixée ou non au fuselage.

La poutre peut être par exemple en acier, en titane, en composite comprenant du carbone et de l'époxy, en magnésium, etc.

L'élément peut être constitué de la poutre.

L'élément peut être constitué de plusieurs poutres.

La poutre constitue un élément présentant une géométrie assurant une certaine résistance. De plus, lorsque la poutre est placée dans le sens perpendiculaire à l'axe vertical de l'aéronef, la poutre assure une protection des réservoirs sur l'ensemble de sa longueur.

Lorsque l'aéronef est de forme longitudinale, la poutre peut être disposée dans le sens de la longueur. Dans le cas d'un avion, la poutre peut être dans le sens de la longueur de l'avion et perpendiculaire à l'axe vertical de l'avion.

Au lieu d'une seule poutre, il est possible de disposer deux poutres ou plus en tant qu'élément séparant les réservoirs. Ces poutres peuvent être parallèles et disposées chacune au même niveau par rapport à l'axe vertical de l'aéronef. Cela permet d'accroitre la résistance de l'élément séparant les deux réservoirs. Lorsque l'aéronef est de forme longitudinale alors les deux poutres ou plus peuvent être disposées dans le sens de la longueur. Dans le cas d'un avion, les deux poutres ou plus peuvent être dans le sens de la longueur de l'avion et perpendiculaire à l'axe vertical de l'avion.

Selon un mode de réalisation, l'aéronef est un avion et la poutre ou les deux poutres sont liées au caisson de voilure.

Cela permet de solidariser la poutre ou les deux ou plus poutres au fuselage et ainsi permettre à celle-ci de suivre la déformation du fuselage évitant ainsi que les poutres ne viennent s'enfoncer dans la partie inférieure du fuselage.

Selon un mode de réalisation, dans lequel la poutre forme une partie d'un plancher.

Par plancher il est entendu le plancher de la soute ou de la cabine.

En utilisant la poutre en tant que plancher la structure de l'aéronef peut être allégée.

Selon un mode de réalisation, l'élément séparant les deux réservoirs est formé par le fuselage.

Ainsi, la structure formant le fuselage sépare les deux réservoirs permettant de ne pas augmenter fortement le poids de l'aéronef.

Selon un mode de réalisation, les réservoirs à hydrogène sont de forme cylindrique.

Lorsque le fuselage est allongé, par exemple dans le cas d'un avion, les réservoirs à hydrogène peuvent être positionnés dans le sens longitudinal du fuselage.

Selon un mode de réalisation, les réservoirs à hydrogène sont de forme sphérique.

Selon un mode de réalisation, un nombre de réservoirs à hydrogène supérieur ou égal à 2 est disposés dans l'espace longitudinal et pour chaque pair de réservoirs, les réservoirs sont séparés par l'élément de sorte que celui-ci dépasse sous les réservoirs pour réduire les contraintes sur les réservoirs en cas de contact du fuselage avec le sol. Cela permet de disposer de plus petits réservoirs ce qui assure une résistance plus forte des réservoirs et permet de réduire les conséquences d'un dommage sur l'un des réservoirs. Les deux réservoirs formant une des paires de réservoirs.

Selon un mode de réalisation, l'aéronef comprend deux autres réservoirs à hydrogène disposés dans ledit espace, les deux autres réservoirs étant au-dessus de l'élément et des au moins deux réservoirs selon un axe vertical de l'aéronef.

Cela permet de simplifier la structure sans pour autant affecter grandement la sécurité des réservoirs situés au-dessus des au moins deux réservoir. En effet, dans ce cas seuls la paire de réservoirs la plus basse selon l'axe vertical est séparés par l'élément.

Selon un mode de réalisation, des structures additionnelles d'amortissement conçues pour se déformer et absorber de l'énergie sont ajoutées entre les réservoirs et/ou entre les réservoirs et l'élément et/ou entre les réservoirs et des éléments de la structure du fuselage.

Selon un mode de réalisation, les réservoirs les plus bas selon l'axe vertical de l'aéronef seront purgés avant l'impact avec le sol. Cela permet aux réservoirs les plus bas de servir de protection à la cabine et/ou aux réservoirs supérieurs en absorbant de l'énergie en se déformant en supplément de l'élément séparant les au moins deux réservoirs.

L'élément séparant les réservoirs à hydrogène peut être une poutre, par exemple, une poutre en acier, en aluminium, en titane, en fibre de carbone et par exemple, de type poutre en **T,** Poutre en I, poutre en caisson, poutre creuse, poutre en treillis, poutre composite à âme en nid d'abeille, etc.

Par poutre en T il est entendu une poutre avec une section transversale en forme de T.

Par poutre en I il est entendu une poutre avec une section transversale en forme de I. Une poutre en I offre une grande rigidité.

Par poutre en caisson il est entendu une poutre formée de deux plaques parallèles reliées par des nervures. Une poutre en caisson offre une grande résistance à la torsion.

Par poutre creuse il est entendu une poutre formée d'un tube creux. Une poutre en treillis offre une grande résistance tout en étant légère.

Par poutre en treillis il est entendu une poutre formée de barres reliées par des nœuds. Une poutre en treillis offre une grande résistance tout en étant légère.

Par poutre composite à âme en nid d'abeille il est entendu une poutre formée d'une couche de matériau composite avec une structure en nid d'abeille à l'intérieur. Une poutre composite à âme en nid d'abeille offre une grande résistance tout en étant légère.

### BREVE DESCRIPTION DES FIGURES

[Fig. 1] représente un avion selon un mode de réalisation de l'état de la technique.
[Fig. 2] représente un aéronef selon un mode de réalisation de l'invention.
[Fig. 3.1] représente une vue de profil d'une partie de l'élément séparant les réservoirs selon le mode de réalisation de la figure 2.
[Fig. 3.2] représente une vue du dessus d'une partie de l'élément séparant les réservoirs selon le mode de réalisation de la figure 2.
[Fig. 4.1] représente une vue de profil d'une partie de l'élément séparant les réservoirs selon le mode de réalisation de la figure 2.
[Fig. 4.2] représente une vue du dessus d'une partie de l'élément séparant les réservoirs selon le mode de réalisation de la figure 2.
[Fig. 5] représente un aéronef selon un second mode de réalisation de l'invention.
[Fig. 6.1] représente une vue de profil d'une partie de l'élément séparant les réservoirs selon le mode de réalisation de la figure 5.
[Fig. 6.2] représente une vue du dessus d'une partie de l'élément séparant les réservoirs selon le mode de réalisation de la figure 5.
[Fig. 7.1] représente une vue de profil d'une partie de l'élément séparant les réservoirs selon le mode de réalisation de la figure 5.
[Fig. 7.2] représente une vue du dessus d'une partie de l'élément séparant les réservoirs selon le mode de réalisation de la figure 5.
[Fig. 8] représente une coupe transversale d'un avion avec un élément séparant les réservoirs selon un autre mode de réalisation.

### DESCRIPTION DETAILLEE DE L'INVENTION

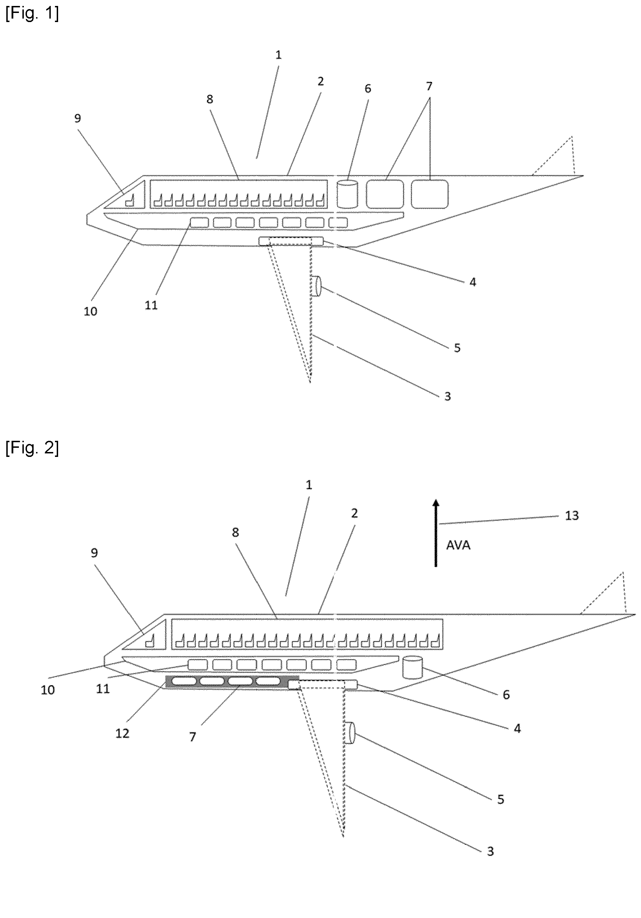

La figure 1 représente un avion 1 de transport de passagers, dit de ligne ou commercial.

L'avion comprend un fuselage 2, des ailes 3 fixées à un caisson de voilure 4. Plus précisément, il s'agit d'un avion propulsé par des moteurs électriques 5 alimentés par de l'électricité produit par une pile à combustible d'hydrogène 6 alimenté par de l'hydrogène stocké dans des réservoirs 7.

L'avion comprend également une cabine passager 8, une cabine de pilotage 9 et une soute 10 dans laquelle sont disposés des conteneurs de soute 11.

Les réservoirs 7 sont placés à l'arrière du fuselage 2 dans une partie de l'avion 1 qui dans les avions de ligne classique sert au transport de passagers. Ainsi, dans cette configuration d'avion propulsé par des moteurs électriques 5 alimentés par des piles à hydrogène 6, la capacité de transport de passagers est réduite de 30%.

La figure 2 représente un avion 1 de transport de passagers de ligne selon un mode de réalisation de l'invention.

L'avion 1 reste semblable concernant le fuselage 2, des ailes 3 fixées au caisson de voilure 4, les moteurs électriques 5, la cabine de pilotage 9 et la soute 10.

Les réservoirs 7 sont disposés dans la partie inférieure du fuselage, c'est-à-dire dans le cadre du mode de réalisation de la figure 2, sous la soute 10. Ces réservoirs fournissent l'hydrogène à la pile à combustible 6. Ces réservoirs sont au nombre de huit, nous voyons quatre réservoirs, les quatre autres sont disposés de l'autre côté de l'élément 12 (derrière l'élément 12). L'élément 12 est ici représenté en gris, cet élément est fixé au caisson de voilure 4. Il peut être également fixé au cadre du fuselage qui n'est pas représenté sur les figures.

L'élément 12 dépasse en dessous et au-dessus des réservoirs 7 par rapport au vecteur de l'axe vertical de l'aéronef (AVA).

Dans le mode de réalisation de la figure 2, les réservoirs d'hydrogène sont de forme cylindrique fermée à chaque extrémité par une demi-sphère. L'élément 12 dépasse sur l'ensemble de la longueur de chaque cylindre, assurant une protection plus grande aux réservoirs.

L'élément 12 peut être une poutre, par exemple, une poutre en acier, en aluminium, en titane, en fibre de carbone et par exemple, de type poutre en T, poutre en I, poutre en caisson, poutre creuse, poutre en treillis, poutre composite à âme en nid d'abeille.

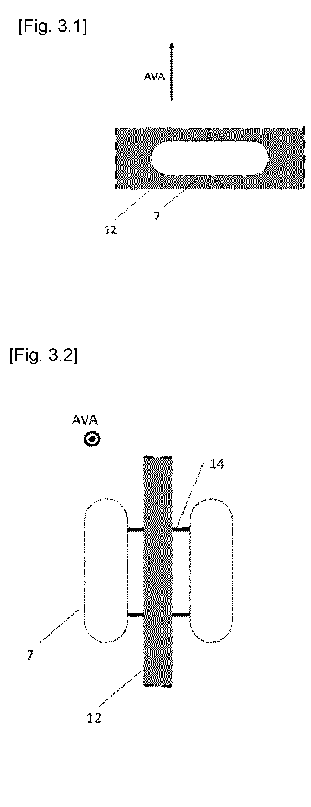

Les figures 3.1 à 4.2 décrivent plus précisément l'élément 12 et ces différentes variantes.

Les figures 3.1 et 3.2 détaillent l'élément 12 et la position de celui-ci par rapport aux réservoirs sous différents angles. Dans ces figures il s'agit du même type d'élément 12 que celui décrit à la figure 2.

La figure 3.1 représente l'élément 12 vu de profil, c'est-à-dire selon le même angle que celui de la figure 2.

L'élément 12 qui est de forme longitudinale, par exemple une poutre, dépasse d'une hauteur h1 sous le réservoir 7 et d'une hauteur h2 au-dessus du réservoir 7. Les hauteurs h1 et h2 sont à déterminer notamment en fonction de plusieurs paramètres :
- le type de matériau employé pour réaliser l'élément 12 ;
- la géométrie de l'élément 12 ;
- la masse de l'avion ;
- sa surface portante ;
- etc.

Ainsi plus, le matériau employé est résistant à la déformation, par exemple en employant du titane plutôt que de l'aluminium et plus les hauteurs pourront être choisies petites. Plus la géométrie de l'élément 12 le rend rigide, par exemple en utilisant une épaisseur importante de matériau ou une forme particulière comme un treillis, plus les hauteurs pourront être choisies petites. De même, plus la masse de l'avion est faible et/ou plus la surface portante est grande et plus les hauteurs pourront être choisies petites. Les paramètres h1 et h2 peuvent être définis par des tests ou par modélisation d'écrasement de l'appareil.

Les hauteurs de dépassement h1 et h2 sont indiquées ici dans le cadre d'un avion, mais elles peuvent être déterminées pour tout aéronef.

La figure 3.2 représente l'élément 12 vu du dessus, c'est-à-dire dans le sens de l'AVA et selon la direction opposée à l'AVA.

Les réservoirs 7 sont positionnés de part et d'autre de l'élément 12 et peuvent être fixés à celui-ci au moyen des éléments d'attache 14. Cela permet aux réservoirs de rester solidaire de l'élément 12 et ainsi d'éviter que les réservoirs 7 ne montent ou ne descendent relativement à l'élément 12 et ainsi ne soient plus protégés par l'élément 12. Ces éléments d'attache 14 peuvent permettre une certaine liberté de mouvement aux réservoirs 7 en cas de contrainte trop élevée sur les réservoirs 7 selon une direction.

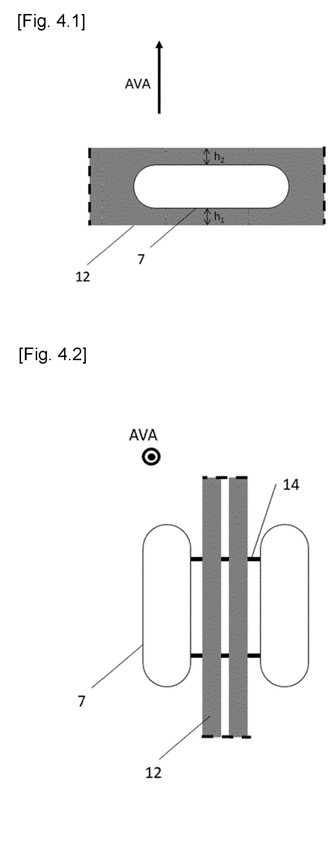

Les figures 4.1 et 4.2 détaillent une alternative à l'élément 12 décrit à aux figures 3.1 et 3.2.

L'élément 12 est dans les figures 4.1 et 4.2 représenté par deux poutres. Ces deux poutres peuvent être fixées l'une à l'autre, par exemple ici par les éléments d'attache 14.

Les hauteurs de dépassement h1 et h2 peuvent être déterminées de la même manière que dans le cas du mode de réalisation des figures 3.1 et 3.2.

En dehors de l'élément 12 les autres éléments restent inchangés par rapport aux figures 3.1 et 3.2.

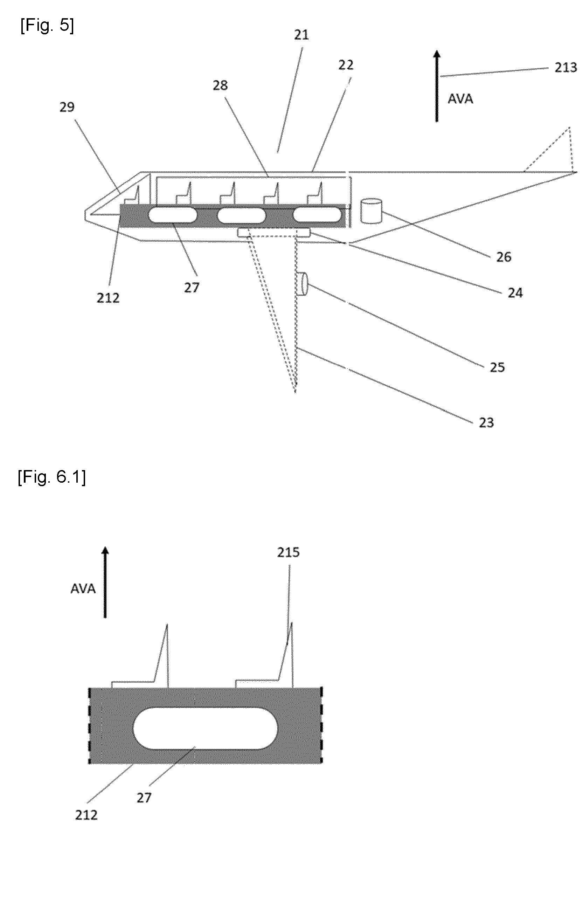

La figure 5 représente un avion 21 de taille plus petite que l'avion de ligne 1 décrit à la figure 2, par exemple un avion de type jet privé.

L'avion 21 présente un fuselage 22, des ailes 23 fixées à un caisson de voilure 24, des moteurs électriques 25, une cabine de pilotage 29 et une cabine de passagers 28.

Le plancher de la cabine de passager est formé par l'élément 212 qui sépare les réservoirs 27. Les réservoirs 27 sont également disposés dans la partie inférieure du fuselage, c'est-à-dire dans le cadre du mode de réalisation de la figure 5, sous la cabine passager 28. Ces réservoirs fournissent l'hydrogène à la pile à combustible 26. Ces réservoirs sont au nombre de six, nous voyons trois réservoirs, les trois autres sont disposés de l'autre côté de l'élément 212. L'élément 212 est ici représenté en gris, cet élément est fixé au caisson de voilure 24. Il peut être également fixé aux cadres du fuselage qui ne sont pas représentés sur les figures.

L'élément 212 dépasse en dessous et au-dessus des réservoirs 27 par rapport au vecteur de l'axe vertical de l'aéronef (AVA).

Dans le mode de réalisation de la figure 5, les réservoirs d'hydrogène sont de forme cylindrique fermée à chaque extrémité par une demi-sphère. L'élément 212 dépasse sur l'ensemble de la longueur des cylindres, assurant une protection plus grande aux réservoirs.

L'élément 212 peut former le plancher de la cabine passager 28.

Les figures suivantes décrivent plus précisément l'élément 212 et ces différentes variantes. Dans ces figures il s'agit du même type d'élément 212 que celui décrit à la figure 5.

La figure 6.1 représente l'élément 212 vu de profil, c'est-à-dire selon le même angle que celui de la figure 5.

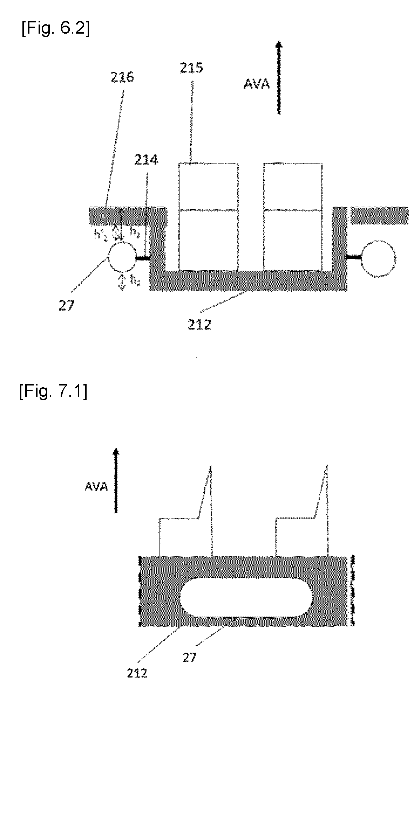

La figure 6.2 représente l'élément 212 vu en coupe transversale, c'est-à-dire une vue selon le sens de la longueur de l'avion.

Les réservoirs 27 sont positionnés de part et d'autre de l'élément 212 et peuvent être fixés à celui-ci au moyen des éléments d'attache 214. Cela permet aux réservoirs de rester solidaire de l'élément 212 et ainsi d'éviter que les réservoirs 27 ne montent ou ne descendent relativement à l'élément 212 et ainsi ne soient plus protégés par l'élément 212. Ces éléments d'attache 214 peuvent permettre une certaine liberté de mouvement aux réservoirs 27 en cas de contrainte trop élevée sur les réservoirs 27.

L'élément 212 qui est de forme longitudinale, par exemple une poutre, dépasse d'une hauteur h1 sous le réservoir 27 et d'une hauteur h2 au-dessus du réservoir 27. Les hauteurs h1 et h2 peuvent être déterminées comme dans le cas des figures 3.1 et 3.2.

Des espaces sont laissés vides en dessous et au-dessus du réservoir 27. L'espace en dessous du réservoir est d'une hauteur de h1. L'espace au-dessus du réservoir est d'une hauteur de h'2. L'espace laissé vide au-dessus du réservoir s'étend entre le réservoir et les éléments latéraux 216 de l'élément 212.

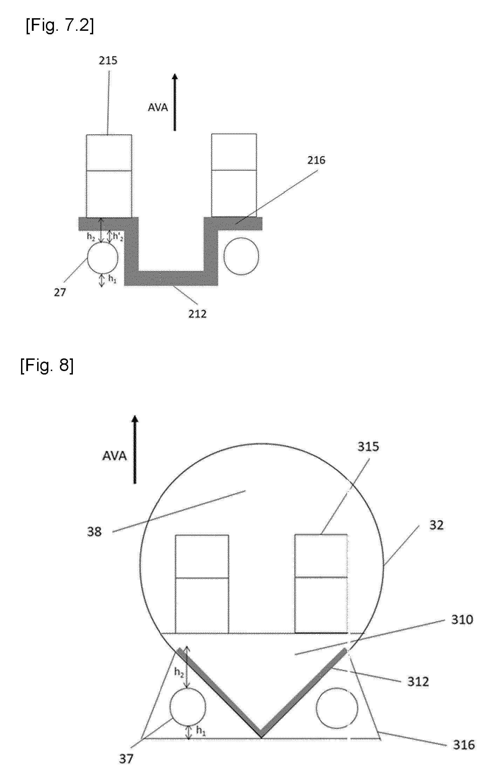

Dans le mode de réalisation des figures 5, 6.1, 6.2, 7.1 et 7.2 l'élément 212 forme un U qui fait partie du plancher de la cabine passager 28. Dans le mode spécifique des figures 6.1 et 6.2 les fauteuils 215 sont placés dans le U alors que dans le mode de réalisation des figures 7.1 et 7.2 les fauteuils 215 sont placés sur les éléments latéraux 216 de l'élément 212.

La figure 8 représente un autre mode de réalisation de l'invention, dans lequel c'est la structure du fuselage elle-même qui sépare les réservoirs. L'angle de vu de la figure 8 est une coupe transversale d'un avion selon l'invention. L'avion présente une cabine passager 38 au-dessus d'une soute 310.

L'élément 312 séparant les réservoirs est représenté en gris. Le fuselage 32 peut être renforcé au niveau de l'élément 312 pour réduire sa déformation en cas d'atterrissage dur.

Dans le mode de réalisation de la figure 8 les réservoirs sont également dans la partie inférieure du fuselage, sous la soute 310. Le fuselage est ici constitué aussi bien de la partie 312 qui sépare les réservoirs que de la structure 316 qui entoure les réservoirs d'hydrogène.

L'élément 312 dépasse d'une hauteur h1 sous le réservoir 37 et d'une hauteur h2 au-dessus du réservoir 37. Les hauteurs h1 et h2 peuvent être déterminées comme dans le cas des figures 3.1 et 3.2.

## Revendications

1. Aéronef comprenant :
- un fuselage (2) comprenant un cadre de fuselage et une zone de soute et/ou une zone de passagers, ledit fuselage comprend également un espace, ledit espace étant situé en dessous de la zone de soute (10) lorsque l'aéronef comprend une zone de soute et sous la zone des passagers sinon ;
- un caisson de voilure (4),
- au moins deux réservoirs à hydrogène (7) disposés dans l'espace ;
- un élément (12) séparant les au moins deux réservoirs à hydrogène, fixé au caisson de la voilure (4) ou au cadre du fuselage (2) de l'aéronef, ledit élément (12) séparant les au moins deux réservoirs à hydrogène (7) dépassant sous les réservoirs pour réduire les contraintes sur les réservoirs en cas de contact du fuselage (2) avec le sol.

2. Aéronef selon la revendication 1 dans lequel l'élément (12) séparant les deux réservoirs à hydrogène (7) dépasse au-dessus des réservoirs pour réduire les contraintes sur les réservoirs en cas de contact du fuselage avec le sol.

3. Aéronef selon l'une des revendications 1 ou 2 dans lequel l'élément (12) séparant les deux réservoirs à hydrogène (7) comprend une poutre.

4. Aéronef selon l'une des revendications 1 ou 2 dans lequel l'élément (12) séparant les deux réservoirs à hydrogène (7) comprend deux poutres.

5. Aéronef selon la revendication 3 ou 4 dans lequel l'aéronef est un avion et la poutre ou les deux poutres sont liées au caisson des ailes.

6. Aéronef selon la revendication 3 dans lequel la poutre forme une partie d'un plancher.

7. Aéronef selon l'une des revendications 1 ou 2 dans lequel l'élément (12) séparant les deux réservoirs est formé par le fuselage.

8. Aéronef selon l'une des revendications précédentes dans lequel les réservoirs à hydrogène (7) sont de forme cylindrique.

9. Aéronef selon l'une des revendications 1 à 7 dans lequel les réservoirs à hydrogène (7) sont de forme sphérique.

10. Aéronef selon l'une des revendications précédentes comprenant un nombre de paires de réservoirs à hydrogène (7) supérieur ou égale à 2 disposés dans ledit espace et pour chaque paire de réservoirs, les réservoirs sont séparés par l'élément (12) de sorte que celui-ci dépasse sous les réservoirs des paires de réservoirs pour réduire les contraintes sur les réservoirs en cas de contact du fuselage avec le sol.

11. Aéronef selon l'une des revendications précédentes comprenant deux autres réservoirs à hydrogène (7) disposés dans ledit espace, les deux autres réservoirs étant au-dessus de l'élément et des au moins deux réservoirs selon un axe vertical de l'aéronef.

## Patentansprüche

1. Luftfahrzeug, welches umfasst:
- einen Rumpf (2) mit einem Rumpfrahmen und einem Frachtraum und/oder einem Passagierraum, worin der Rumpf zudem einen Raum umfasst, der sich unterhalb des Frachtraums (10) befindet, wenn das Luftfahrzeug einen Frachtraum umfasst, und andernfalls unterhalb des Passagierraums;
- einen Flügelkasten (4),
**dadurch gekennzeichnet, dass** es ferner umfasst:
- mindestens zwei in dem Raum angeordnete Wasserstofftanks (7);
- ein Element (12), das die mindestens zwei Wasserstofftanks trennt und am Flügelkasten (4) oder am Rumpfrahmen (2) des Luftfahrzeugs befestigt ist, worin das Element (12), das die mindestens zwei Wasserstofftanks (7) trennt, unterhalb der Tanks hervorsteht, um die Belastung der Tanks im Falle eines Kontakts zwischen dem Rumpf (2) und dem Boden zu verringern.

2. Luftfahrzeug nach Anspruch 1, worin sich das Element (12), das die beiden Wasserstofftanks (7) trennt, über die Tanks erstreckt, um die Belastung der Tanks im Falle eines Kontakts zwischen dem Rumpf und dem Boden zu verringern.

3. Luftfahrzeug nach einem der Ansprüche 1 oder 2, worin das Element (12), das die beiden Wasserstofftanks (7) trennt, einen Träger umfasst.

4. Luftfahrzeug nach einem der Ansprüche 1 oder 2, worin das Element (12), das die beiden Wasserstofftanks (7) trennt, zwei Träger umfasst.

5. Luftfahrzeug nach Anspruch 3 oder 4, worin das Luftfahrzeug ein Flugzeug ist und der Träger oder die beiden Träger mit dem Flügelkasten verbunden sind.

6. Luftfahrzeug nach Anspruch 3, worin der Träger einen Teil eines Bodens bildet.

7. Luftfahrzeug nach einem der Ansprüche 1 oder 2, worin das Element (12), das die beiden Tanks trennt, durch den Rumpf gebildet wird.

8. Luftfahrzeug nach einem der vorstehenden Ansprüche, worin die Wasserstofftanks (7) zylindrisch geformt sind.

9. Luftfahrzeug nach einem der Ansprüche 1 bis 7, worin die Wasserstofftanks (7) kugelförmig sind.

10. Luftfahrzeug nach einem der vorstehenden Ansprüche, mit einer Anzahl von mindestens zwei Paaren von Wasserstofftanks (7), die in dem Raum angeordnet sind, worin die Tanks jedes Paares durch das Element (12) voneinander getrennt sind, so dass es unter die Tanks des Paares hineinragt, um die Belastung der Tanks im Falle eines Kontakts zwischen dem Rumpf und dem Boden zu verringern.

11. Luftfahrzeug nach einem der vorstehenden Ansprüche, welches zwei weitere Wasserstofftanks (7) umfasst, die in dem Raum angeordnet sind, worin sich die beiden weiteren Tanks über dem Element und die mindestens zwei Tanks entlang einer vertikalen Achse des Luftfahrzeugs befinden.

## Claims

1. Aircraft comprising:
- a fuselage (2) comprising a fuselage frame and a cargo area and/or a passenger area, said fuselage also comprising a space, said space being located below the cargo area (10) when the aircraft comprises a cargo area and below the passenger area otherwise;
- a wing box (4),
**characterised in that** it further comprises:
- at least two hydrogen tanks (7) arranged in the space;
- an element (12) separating the at least two hydrogen tanks, fixed to the wing box (4) or to the fuselage frame (2) of the aircraft
said element (12) separating the at least two hydrogen tanks (7) protruding below the tanks to reduce stress on the tanks in the event of contact between the fuselage (2) and the ground.

2. Aircraft according to claim 1, wherein the element (12) separating the two hydrogen tanks (7) extends above the tanks to reduce stress on the tanks in the event of contact between the fuselage and the ground.

3. Aircraft according to one of claims 1 or 2, wherein the element (12) separating the two hydrogen tanks (7) comprises a beam.

4. Aircraft according to one of claims 1 or 2, wherein the element (12) separating the two hydrogen tanks (7) comprises two beams.

5. Aircraft according to claim 3 or 4, wherein the aircraft is an aeroplane and the beam or two beams are connected to the wing box.

6. Aircraft according to claim 3, wherein the beam forms part of a floor.

7. Aircraft according to one of claims 1 or 2, wherein the element (12) separating the two tanks is formed by the fuselage.

8. Aircraft according to one of the preceding claims, wherein the hydrogen tanks (7) are cylindrical in shape.

9. Aircraft according to one of claims 1 to 7, wherein the hydrogen tanks (7) are spherical in shape.

10. Aircraft according to one of the preceding claims, comprising a number of pairs of hydrogen tanks (7) greater than or equal to 2 arranged in said space and, for each pair of tanks, the tanks are separated by the element (12) so that it protrudes beneath the tanks of the pairs of tanks to reduce stress on the tanks in the event of contact between the fuselage and the ground.

11. Aircraft according to one of the preceding claims comprising two other hydrogen tanks (7) arranged in said space, the two other tanks being above the element and the at least two tanks along a vertical axis of the aircraft.
